# EUROPEAN PATENT APPLICATION

(11) **EP 1 266 600 A1**
(43) Date of publication of application: **18.12.2002**
(21) Application number: 01870128.4
(22) Date of filing: 13.06.2001
(51) Int. Cl.: A47K 10/42, C09D 11/10, B41M 7/00

(54) **Printed wet wipes**

(71) Applicant: The Procter & Gamble Company, Cincinnati, Ohio 45202 (US); SunChemical Corporation, Fort Lee, NJ 07024 (US)
(72) Inventor: Tomarchio, Vincenzo, 91001 Alcamo (TP) (IT); Piccini, Andrea, 00151 Roma (IT); Reynolds, Anthony, 1150 Woluwe St. Pierre (BE); Pochart, Nicolas Remy Denis Joseph, 1050 Brussels (BE)
(74) Representative: Goodier, Claire-Louise

(57) **Abstract**

The present invention relates to a printed wet wipe comprising a flexible sheet like substrate to which has been applied an aqueous or non-aqueous composition and printed with a non-aqueous or aqueous ink, respectively. The present invention also relates to a stack of said printed wet wipes and the use of said inks in the manufacture of printed wipes.

## Description

### Field of the invention

The present invention relates to printed wet wipes and a method of cleaning surfaces with said printed wet wipes.

### Background of the invention

Wet wipes are typically pre-moistened, disposable towelettes which may be utilised in a variety of applications both domestic and industrial and perform a variety of functions. Wet wipes are typically used to wipe surfaces both animate and inanimate, and may provide numerous benefits such as cleaning, cleansing, disinfecting, and skin care benefits.

Wet wipes incorporating a cleaning composition are already known in the art. For example, WO 89/05114 and EP-A-1063284 disclose disposable wipes which are impregnated with a liquid composition.

One particular application for wet wipes is wiping and or cleaning hard surfaces and the application of compositions to hard surfaces, for example kitchen and bathroom surfaces, eyeglasses, shoes and surfaces which require cleaning in industry for example surfaces of machinery or automobiles.

The present invention addresses the problem of how to efficiently clean a surface with the minimum spreading of contamination. The present invention is especially useful on frequently contaminated surfaces, such as the toilet apparatus comprising the toilet bowl, the rim, the seat, the handle, and the rest of the exterior. It is well known that, in order to clean these surfaces efficiently, it is essential to minimize the spread of germs or bacteria from one toilet surface to another. Furthermore, it is essential to minimize the spread of contamination from the toilet to other areas of the household. Historically, the toilet area was cleaned with a reusable sponge or similar cleaning article. A disadvantage with such a reusable article is that contamination tends to reside in the cleaning article. This residual contamination results in the spreading of contamination when surfaces are cleaned. In order to improve on this, the Applicants provided a disposable wet wipe (EP-A-00870142.7) which could be used to clean a surface with reduced risk of spreading contamination. However, these wet wipes, whilst allowing the consumer to avoid the spread of contamination resulted in only part of the wet wipe being used for cleaning. Such inefficient, underutilization of the wet wipe leads to increased waste and increased cost for the consumer.

It is therefore an object of the present invention to provide the consumer with an article which can be used to rapidly and efficiently clean a surface with minimum spreading of contamination.

### Summary of the invention

The present application relates to:
a wet wipe comprising a flexible sheet-like substrate which comprises an aqueous composition, characterised in that the substrate is printed with a non-aqueous ink; and
a wet wipe comprising a flexible sheet-like substrate which comprises a non-aqueous composition, characterised in that the substrate is printed with an aqueous ink; and
a process for making a wet wipe, characterised in that ink is printed onto the substrate before composition is applied to the substrate; and
a process for making a wet wipe, wherein the substrate is printed, then a varnish is spread over at least the surface of the substrate which has been printed, then composition is applied to the substrate.
a stack of wipes, at least two of said wipes each being printed with printed matter, wherein the printed wipes are arranged in a certain order so as to communicate a message; and
a stack of wipes wherein at least one of said wipes, preferably the top wipe, is printed with usage instructions for the wipes; and
a stack of wipes wherein at least one of said wipes, preferably a wipe amongst the bottom most, is printed with a instructions indicating that the stack of wipes is nearly finished; and
the use of Bianca TW® to print images onto a substrate to which a composition will be applied; and
the use of Bianca TW® in the manufacture of printed wet wipes; and
the use of a crosslinking polymer or a crosslinking agent or mixtures thereof to fix pigment to a substrate to which a composition will be applied.

### Description of the invention

According to the first object of the present invention, the Applicant has surprisingly discovered that by distinguishing one face of the wet wipe from the other by printing an image onto one surface of the wet wipe, the spread of contamination is reduced.

The term "image" when used with reference to printing includes, but is not limited to, any type of design, mark, figure, picture, identification code, words, patterns or instructions. In an alternative embodiment, both sides of the wipe may be printed with different images.

While not wishing to be bound by theory, the Applicant believes that the underlying problem addressed by the present invention is that during the cleaning process, the consumer has difficulty observing and remembering which parts of the wet wipe have been contaminated by contact with the surface. Because the consumer is unsure which part of the wet wipe is contaminated, he risks the spread of contaminate by using the wipe to clean other surfaces. By printing an image onto one side of the wipe, the consumer can now orientate the wipe so as to firstly plan his use of the surface area of the wipe, and secondly, to have much greater confidence in which areas of the wipe are contaminated. For example, the consumer may use a portion of one side of the wipe for cleaning one surface then use the remaining portion for cleaning an alternative surface in the home. Since one side of the printed wet wipe is now clearly distinct from the other, the consumer may clean a surface with one side of the wipe then confidently clean a different surface with the other side of the wipe without risking contamination.

An additional benefit of printed wet wipes according to the present invention is that they can be used to communicate with the consumer. Particularly beneficial messages to communicate to the consumer are the instructions for use of the product and a message to indicate that the stack of wipes is nearly finished.

It is disadvantageous that when consumers fail to comply with product usage instructions the performance of the product may be reduced. The usage instructions for wet wipes may be printed or displayed on the package. When the consumer removes the wipe from the package, the instructions are no longer instantly visible. By using printed wet wipes according to the present invention, the products usage instructions can be communicated to the consumer via the printing on the wipes. In a preferred embodiment, at least one printed wipe, preferably the top wipe, comprises instructions for use. This has the advantage that the instructions are actually held in the hand of the consumer rather than on a package or label. Such proximity to the instructions will increase the impact of the message and improve the consumer's understanding of the instructions and advantages of the product while increasing cleaning performance. When reference is made herein to the top wipe or bottom wipe, we refer to the relative position of the wipe in the stack. A stack of wipes comprises a plurality of wipes on top of one another. When the dispensing opening of the package is opened, the top wipe is situated on the top of the stack of wipes, i.e. the first wipe to be seen and removed. The bottom wipe is situated further towards the bottom of the stack and is preferably amongst the bottommost 45%, more preferably 30% and most preferably 10% of the wipes in the container.

It is disadvantageous that consumers can easily run out of wet wipes before they remember to purchase another package or refill. This problem has been solved by incorporating printed wet wipes according to the present invention into the stack of wipes. One or more printed wet wipes within the stack preferably comprise messages that communicate with the consumer. In a preferred embodiment, the message communicates how many wipes remain. To communicate with the consumer via a printed wet wipe is preferable to the use of a sheet of plastic, paper or other material because the wipe can be used for cleaning whereas a sheet of non-wipe material must be disposed of thus increasing the amount of waste. In a further preferred embodiment the messages on the printed wet wipes form a sequence that communicates a number of related messages.

Printed wet wipes according to the present invention comprise ink, a substrate and a composition.

### Ink

When reference is made to ink, it meant herein a composition comprising a colourant (e.g. a dye or pigment) that is suspended, dispersed or dissolved in a solvent, for example water. Preferred inks for use in the present application are substantive to the substrate and exhibit minimal bleeding on contact with water or the composition. Inks suitable for use in the present application are preferably aqueous or non-aqueous. It is highly preferable to use non-aqueous ink when the composition is aqueous. It is also highly preferred to use aqueous ink when the composition is non-aqueous. Highly preferred inks for use in wipes according to the present invention comprise a pigment, a cross linking polymer, a cross linking agent and, optionally, a solvent. Preferred cross liking polymers comprised vinyl and/or acrylic functionalities. It is preferred that the inks have a viscosity higher than that of water, more preferably between 5 and 200 centistokes, even more preferably between 20 and 100, most preferably between 35 and 85. The viscosity of the ink was measured at room temperature and pressure using a Zahn Cup #2 The experimental procedure consists of measuring the time required for the full Zahn Cup #2 to completely empty via the bottom hole of the Zahn cup.

An example of a suitable ink for use in printed wet wipes according to the present invention is sold by SunChemical Corporation under the European code PG50VA02. The trade name of the ink is Bianca TW.

While not wishing to be bound by theory, the mechanism of action of inks such as Bianca TW® is as follows: the pigment is dispersed in a vinyl or acrylic containing polymer, upon reaction with a cross linking agent the vinyl or acrylic containing polymers form a web of cross linked polymers that traps the pigments and fixes the pigment to the substrate.

In another method of fixing ink to a wipe substrate, the ink may be applied to the substrate then a varnish applied to at least the printed areas of the substrate. In this method, the ink comprises a pigment dispersed in a vinyl or acrylic containing polymer and the varnish comprises a cross linking agent. Thus, the varnish causes the pigment to be trapped in a web of cross linked polymers and fixed to the substrate.

The ink may be printed onto the substrate using any method known to those skilled in the art. Preferably, the ink is printed onto the substantially dry substrate then allowed to dry before composition is applied to the substantially dry printed substrate. The process of drying the ink on the printed substrate can be accelerated by using heating, UV, microwave or infrared ovens.

Ink may be applied to the wipes using any method known to those skilled in the art. Preferably, the ink is applied using flexographic printers. Flexography printing is well known to those skilled in the art. Details are included in the following texts commonly available to those skilled in the art: Reference encyclopedia of flexographic equipment and supplies by Robert P. Long, Manual for flexographic inks by Cliff Woof, Selected Bibliography on Flexography 1980-1984 by Chris Losee (Editor).

### Substrate

The substrate may comprise any sheet like material, preferably a web, typically as a sheet of material cut from the web. Said web may be made of the sheets of material from which the wipes are produced, preferably cut. The web may be woven or nonwoven, foam, sponge, battings, balls, puffs, films, or tissue paper comprising synthetic and/or man-made fibres, most preferably the web is nonwoven comprising synthetic and/or man-made fibres.

According to the present invention the sheet may be produced by any method known in the art. For example nonwoven material substrates can be formed by dry forming techniques such as carding, air-laying or wet laying such as on a paper making machine. Other nonwoven manufacturing techniques such as melt blown, spun bonded, needle punched and spun laced methods may also be used.

While various embodiments of a web to provide a substrate are within the scope of the present invention and are detailed below, in a preferred embodiment the web is air-laid and non-woven comprising man-made fibres. In a highly preferred embodiment, the web used in the present invention is produced using the carding method, during which entangled fibrous mats are transformed into parallel fibrous webs.

The term man-made fibre, as used herein, denotes fibres manufactured from cellulose, either derivative or regenerated. They are distinguished from synthetic fibres which are based on synthetic organic polymers. A derivative fibre, suitable for use herein, is one formed when a chemical derivative of a natural polymer, e.g., cellulose, is prepared, dissolved, and extruded as a continuous filament, and the chemical nature of the derivative is retained after the fibre formation process. A regenerated fibre, as used herein, is one formed when a natural polymer, or its chemical derivative, is dissolved and extruded as a continuous filament, and the chemical nature of the natural polymer is either retained or regenerated after the fibre formation process. Typical examples of man made fibres include: regenerated viscose rayon and cellulose acetate. Preferred man-made fibres have a fineness of 0.5 dtex to 3.0 dtex, more preferably of 1.0 dtex to 2.0 dtex, most preferably of 1.6 dtex to 1.8 dtex.

A preferred man made fibre used for the present invention are Lyocell® fibres that are produced by dissolving cellulose fibres in N-methylmorpholine-N-oxide and which are supplied by Tencel Fibres Europe, UK.

Man-made fibres are preferred herein due to their high consumer acceptance and their cheap and typically ecological production. Importantly, man-made fibres and in particular cellulose derived man-made fibres exhibit a high biodegradability, hence are environment friendly after disposal.

According to the present invention the web may comprise man-made fibres at a level of preferably from 5% to 50%, more preferably from 10% to 30%, most preferably from 12% to 25%. Preferably, the web may further comprise a number of different fibre material as hydrophilic fibre material such as viscose, cotton, or flax and a hydrophobic fibre material such as polyethylene tetraphthalate (PET) or polypropylene (PP) in a ratio of 10%-90% hydrophilic and 90%-10% hydrophobic material by weight. A particularly preferred web comprises 70% wood pulp, 12% man-made fibres and 18% latex binder, preferably a butadiene-styrene emulsion.

The web preferably has a weight of at least 20 gm⁻² and preferably less than 150 gm⁻², and most preferably the base weight is in the range of 20 gm⁻² to 100 gm⁻², more preferably from 40 gm⁻² to 80 gm⁻². The web may have any calliper. Typically, when the web is made by an air laying process, the average web calliper is less than 1.0 mm. More preferably the average calliper of the web is from 0.1 mm to 0.9 mm. The web calliper is measured according to standard EDANA nonwoven industry methodology, reference method # 30.4-89.

In addition to the fibres used to make the web, the web can comprise other components or materials added thereto as known in the art, including binders as specified. Furthermore, the web may also comprise agents to improve the optical characteristics of the web such as opacifying agents, for example titanium dioxide.

According to the present invention the web may comprise a non-acrylate binder. The term "binder" as used herein describes any agent employed to interlock fibers. Such agents comprise wet strength resins and dry strength resins. It is often desirable particularly for cellulose based materials to add chemical substances known in the art as wet strength resins. A general dissertation on the types of wet strength resins utilised namely in the paper art can be found in TAPPI monograph series No. 29, Wet Strength in Paper and Paperboard, Technical Association of the Pulp and Paper Industry (New York, 1965). In addition to wet strength additives, it can also be desirable to include certain dry strength and lint control additives known in the art such as starch binders.

Preferred binders used to bond non-wovens are polymeric binders, preferably latex binders, more preferably waterborne latex binders. Suitable binders include butadiene-styrene emulsions, ethylene vinyl acetate emulsions, vinyl acetate, vinyl chloride and combinations thereof. Preferred latex binders are made from styrene, butadiene, acrylonitrile-butadiene emulsions or combination thereof.

The term non-acrylate binder, as used herein, encompasses all latex binders that do not comprise acrylic acid or acrylic acid ester or vinyl acetate monomers. Preferred binders according to the present invention include: Butadiene-styrene emulsions, carboxylated styrene-butadiene emulsion, Acrylonitrile-butadiene emulsions, polyacrylamide resins, Polyamide-epichlorohydrin resin, Acrylonitrile-Butadiene-Styrene emulsion, Styrene Acrylonitrile. The most preferred binder according the present invention is a butadiene-styrene emulsion, which can be commercially obtained from the Ameribol Svnpol Corp. as Rowene™ SB 5550.

The binder can be applied to the web by any method known in the art. Suitable methods include spraying, coating (e.g. gravure coating or flood coating), padding, foaming, impregnation, saturation and further extrusion whereby the composition is forced through tubes in contact with the substrate whilst the substrate passes across the tube or combinations of these application techniques. For example spraying the composition on a rotating surface such as calendar roll that then transfers the composition to the surface of the substrate. The most preferred method for the application of the binder is spraying onto the web. Most preferably the binder is sprayed onto one side of the web in one step of application and onto the other side of the web in an independent step of application.

Typically, the amount of the binder applied to the web, as measured in weight % of the dry weight of the fibres comprised by the web, is from 5% to 30%, more preferably from 10% to 25 %, most preferably from 14% to 22%. Of course the amount of binder to be applied largely depends on the kind of web to be treated.

In order to achieve the strength requirement of one highly preferred embodiment of the printed wet wipe substrate, the fibres are hydroentangled. Hydroentanglement is a process whereby fibers of the web are rearranged and entangled by means of fluid forces. Hydroentanglement can in this way be used as a bonding means, repositioning and entangling individual fibers into configurations that bring about frictional interlocking at the fiber level. In addition to the bonding benefits, hydroentanglement can also be used to provide surface texturing, whereby hydroentanglement repositions fibers into open-patterned arrangements. Webs that have undergone a hydroentanglement treatment, contain no chemical binders, and have not been thermally bonded. Hydroentangled non-woven webs are mechanically strong, can withstand stretching, pulling and abrasion, but can are be made to be tactil and soft. Furthermore the absorbency and wetting capability of the web is not adversely affected by the hydroentanglement process.

Hence according to the present invention the substrate of the most preferred embodiment is composed of substantially 100% hydroentangled man-made regenerated cellulosic fibres.

According to the present invention the printed wet wipe comprises a substrate which incorporates a cleaning composition as described herein. By "incorporates" it is meant herein that said substrate or wet wipe is coated or impregnated with a liquid cleaning composition as described herein.

In preparing wet wipes according to the present invention, the composition is applied to at least one surface of the substrate material. The composition can be applied to the substrate after the substrate has been substantially dried. Preferably, the composition is applied after the printed image on the printed wet wipe substrate has substantially dried. Any variety of application methods that evenly distribute lubricious materials having a molten or liquid consistency can be used. Suitable methods for the application of composition include spraying, coating (e.g. gravure coating or flood coating) extrusion whereby the composition is forced through tubes in contact with the substrate whilst the substrate passes across the tube or combinations of these application techniques. For example spraying the composition on a rotating surface such as calender roll that then transfers the composition to the surface of the substrate. The composition can be applied either to one surface of the substrate or both surfaces, preferably both surfaces. The preferred application method is extrusion coating.

The composition can also be applied uniformly or non uniformly to the surfaces of the substrate. By non uniform it is meant that for example the amount, pattern of distribution of the composition can vary over the surface of the substrate. For example some of the surface of the substrate can have greater or lesser amounts of composition, including portions of the surface that do not have any composition on it. Preferably however the composition is uniformly applied to the surfaces of the wipes. The composition is typically applied in an amount of from about 0.5 g to 10 g per gram of substrate, preferably from 1.0 g to 5 g per gram of substrate, most preferably from 2 g to 4 g per gram of dry substrate.

Preferably, the composition can be applied to the substrate at any point after the substrate and the printed image have substantially dried. For example the composition can be applied to the substrate prior to calendering or after calendering and prior to being wound up onto a parent roll. Typically, the application will be carried out on a substrate unwound from a roll having a width equal to a substantial number of wipes it is intended to produce. The substrate with the composition applied thereto is then subsequently perforated utilising standard techniques in order to produce the desired perforation line.

### Composition

The composition of the present invention is preferably suitable for use as a cleaning and/or disinfecting composition. The compositions may be formulated in any suitable form for example as a solid, paste or liquid. In the case where the compositions according to the present invention are formulated as solids, they can be applied to the substrate as a solid or alternatively can be mixed with an appropriate solvent, typically water, before application to the substrate. Where the composition is in liquid form, the compositions are preferably but not necessarily formulated as aqueous compositions. Liquid compositions are preferred herein for convenience of use.

In a preferred embodiment the liquid compositions used in printed wet wipes according to the present invention are aqueous compositions typically comprising from 50% to 99.9% by weight of the total composition of water, preferably from 70% to 99% and more preferably from 80% to 99%. These aqueous compositions preferably have a pH as is of not more than 13.0, more preferably from 1 to 11, and most preferably from 2 to 10. The pH of the compositions can be adjusted by using organic or inorganic acids, or alkalinising agents, such as sodium hydroxide.

In an alternative preferred embodiment, the composition can be substantially non-aqueous. Said non-aqueous compositions comprise from 50% to 99.9% by weight of the total composition of non-aqueous solvent, preferably from 70% to 99% and more preferably from 80% to 99%. Compositions according to the present invention can comprise any non-aqueous solvent known to those skilled in the art.

Compositions suitable for use as a cleaning composition preferably have pH in the range of from 5 to 13, more preferably from 7 to 13 and most preferably from 8 to 10. Compositions for use as disinfecting compositions preferably have a pH in the range of from 0 to 7, more preferably from 1 to 5 and most preferably from 2 to 4.

The compositions herein may comprise a variety of ingredients including, but not limited to peroxygen bleach, disinfecting components, organic acids, surfactants, chelants, solvents, builders, stabilisers, bleach activators, soil suspenders, brighteners, perfumes, anti dusting agents, enzymes, dispersant, perfumes, radical scavengers, pH buffers, or mixtures thereof.

### Surfactant System

According to the present invention the substrate preferably incorporates a composition comprising a surfactant system. The surfactant system consists of a synergistic system comprising at least three surfactants, namely an anionic, a nonionic and an amphoteric and/or zwitterionic surfactant.

The compositions preferably comprises the surfactant system at a level by weight of the total composition of from 0.05-20%, more preferably from 0.1-5% and most preferably from 0.2-3%.

### Anionic Surfactant:

Suitable anionic surfactants for use herein include alkyl sulphates. Suitable alkyl sulphates for use herein include water-soluble salts or acids of the formula ROSO₃M wherein R is a C₆-C₂₄ linear or branched, saturated or unsaturated alkyl group, preferably a C₈-C₂₀ alkyl group, more preferably a C₈-C16 alkyl group and most preferably a C₁₀-C14 alkyl group, and M is H or a cation, e.g., an alkali metal cation (e.g., sodium, potassium, lithium), or ammonium or substituted ammonium (e.g., methyl-, dimethyl-, and trimethyl ammonium cations and quaternary ammonium cations, such as tetramethyl-ammonium and dimethyl piperdinium cations and quaternary ammonium cations derived from alkylamines such as ethylamine, diethylamine, triethylamine, and mixtures thereof, and the like).

Suitable anionic surfactants for use herein further include alkyl aryl sulphates. Suitable alkyl aryl sulphates for use herein include water-soluble salts or acids of the formula ROSO₃M wherein R is an aryl, preferably a benzyl, substituted by a C₆-C₂₄ linear or branched saturated or unsaturated alkyl group, preferably a C₈-C20 alkyl group and more preferably a C₁₀-C₁₆ alkyl group and M is H or a cation, e.g., an alkali metal cation (e.g., sodium, potassium, lithium, calcium, magnesium and the like) or ammonium or substituted ammonium (e.g., methyl-, dimethyl-, and trimethyl ammonium cations and quaternary ammonium cations, such as tetramethyl-ammonium and dimethyl piperdinium cations and quaternary ammonium cations derived from alkylamines such as ethylamine, diethylamine, triethylamine, and mixtures thereof, and the like).

Suitable anionic surfactants for use herein further include alkoxylated sulphate surfactants. Suitable alkoxylated sulphate surfactants for use herein are according to the formula RO(A)ₘSO₃M wherein R is an unsubstituted C₆-C₂₄ alkyl, hydroxyalkyl or alkyl aryl group, having a linear or branched C₆-C₂₄ alkyl component, preferably a C₁₂-C₂₀ alkyl or hydroxyalkyl, more preferably C₁₂-C₁₈ alkyl or hydroxyalkyl, A is an ethoxy or propoxy or butoxy unit or a mixture thereof, m is greater than zero, typically between 0.5 and 6, more preferably between 0.5 and 3, and M is H or a cation which can be, for example, a metal cation (e.g., sodium, potassium, lithium, calcium, magnesium, etc.), ammonium or substituted-ammonium cation. Alkyl ethoxylated sulphates, alkyl butoxylated sulphates as well as alkyl propoxylated sulphates are contemplated herein. Specific examples of substituted ammonium cations include methyl-, dimethyl-, trimethyl-ammonium and quaternary ammonium cations, such as tetramethyl-ammonium, dimethyl piperdinium and cations derived from alkanolamines such as ethylamine, diethylamine, triethylamine, mixtures thereof, and the like. Exemplary surfactants are C₁₂-C₁₈ alkyl polyethoxylate (1.0) sulphate (C₁₂-C₁₈E(1.0)SM), C₁₂-C₁₈ alkyl polyethoxylate (2.25) sulphate (C₁₂-C₁₈E(2.25)SM), C₁₂-C₁₈ alkyl polyethoxylate (3.0) sulphate (C₁₂-C₁₈E(3.0)SM), and C₁₂-C₁₈ alkyl polyethoxylate (4.0) sulphate (C₁₂-C₁₈E(4.0)SM), wherein M is conveniently selected from sodium and potassium.

Suitable anionic surfactants for use herein further include alkyl sulphonates. Suitable alkyl sulphonates for use herein include water-soluble salts or acids of the formula RSO₃M wherein R is a C₆-C₂₀ linear or branched, saturated or unsaturated alkyl group, preferably a C₈-C₁₈ alkyl group and more preferably a C₈-C₁₂ linear or branched alkyl group, and M is H or a cation, e.g., an alkali metal cation (e.g., sodium, potassium, lithium), or ammonium or substituted ammonium (e.g., methyl-, dimethyl-, and trimethyl ammonium cations and quaternary ammonium cations, such as tetramethyl-ammonium and dimethyl piperdinium cations and quaternary ammonium cations derived from alkylamines such as ethylamine, diethylamine, triethylamine, and mixtures thereof, and the like).

Suitable anionic surfactants for use herein further include alkyl aryl sulphonates. Suitable alkyl aryl sulphonates for use herein include water-soluble salts or acids of the formula RSO₃M wherein R is an aryl, preferably a benzyl, substituted by a C₆-C₂₀ linear or branched saturated or unsaturated alkyl group, preferably a C₈-C₁₈ alkyl group and more preferably a C₉-C₁₄ alkyl group, and M is H or a cation, e.g., an alkali metal cation (e.g., sodium, potassium, lithium, calcium, magnesium and the like) or ammonium or substituted ammonium (e.g., methyl-, dimethyl-, and trimethyl ammonium cations and quaternary ammonium cations, such as tetramethyl-ammonium and dimethyl piperdinium cations and quaternary ammonium cations derived from alkylamines such as ethylamine, diethylamine, triethylamine, and mixtures thereof, and the like).

Particularly suitable alkyl sulphonates include C₁₄-C₁₇ paraffin sulphonate like Hostapur ® SAS commercially available from Hoechst. An example of commercially available alkyl aryl sulphonate is Lauryl aryl sulphonate from Su.Ma.. Particularly preferred alkyl aryl sulphonates are alkyl benzene sulphonates commercially available under trade name Nansa® available from Albright&Wilson.

Suitable anionic surfactants for use herein further include alkoxylated sulphonate surfactants. Suitable alkoxylated sulphonate surfactants for use herein are according to the formula R(A)ₘSO₃M wherein R is an unsubstituted C₆-C₂₀ alkyl, hydroxyalkyl or alkyl aryl group, having a linear or branched C₆-C₂₀ alkyl component, preferably a C₁₂-C₂₀ alkyl or hydroxyalkyl, more preferably C₁₂-C₁₈ alkyl or hydroxyalkyl, A is an ethoxy or propoxy or butoxy unit, m is greater than zero, typically between 0.5 and 6, more preferably between 0.5 and 3, and M is H or a cation which can be, for example, a metal cation (e.g., sodium, potassium, lithium, calcium, magnesium, etc.), ammonium or substituted-ammonium cation. Alkyl ethoxylated sulphonates, alkyl butoxylated sulphonates as well as alkyl propoxylated sulphonates are contemplated herein. Specific examples of substituted ammonium cations include methyl-, dimethyl-, trimethyl-ammonium and quaternary ammonium cations, such as tetramethyl-ammonium, dimethyl piperdinium and cations derived from alkanolamines such as ethylamine, diethylamine, triethylamine, mixtures thereof, and the like. Exemplary surfactants are C₁₂-C₁₈ alkyl polyethoxylate (1.0) sulphonate (C₁₂-C₁₈E(1.0)SM), C₁₂-C₁₈ alkyl polyethoxylate (2.25) sulphonate (C₁₂-C₁₈E(2.25)SM), C₁₂-C₁₈ alkyl polyethoxylate (3.0) sulphonate (C₁₂-C₁₈E(3.0)SM), and C₁₂-C₁₈ alkyl polyethoxylate (4.0) sulphonate (C₁₂-C₁₈E(4.0)SM), wherein M is conveniently selected from sodium and potassium. Particularly suitable alkoxylated sulphonates include alkyl aryl polyether sulphonates like Triton X-200® commercially available from Union Carbide.

Suitable anionic surfactants for use herein further include C₆-C₂₀ alkyl alkoxylated linear or branched diphenyl oxide disulphonate surfactants. Suitable C₆-C₂₀ alkyl alkoxylated linear or branched diphenyl oxide disulphonate surfactants for use herein are according to the following formula: 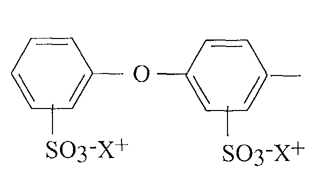 wherein R is a C₆-C₂₀ linear or branched, saturated or unsaturated alkyl group, preferably a C₆-C₁₈ alkyl group and more preferably a C₆-C₁₄ alkyl group, and X+ is H or a cation, e.g., an alkali metal cation (e.g., sodium, potassium, lithium, calcium, magnesium and the like). Particularly suitable C₆-C₂₀ alkyl alkoxylated linear or branched diphenyl oxide disulphonate surfactants to be used herein are the C₁₂ branched di phenyl oxide disulphonic acid and C₁₆ linear di phenyl oxide disulphonate sodium salt respectively commercially available by DOW under the trade name Dowfax 2A1® and Dowfax 8390®.

Other suitable anionic surfactants for use herein include alkyl-carboxylates. Other anionic surfactants can include salts (including, for example, sodium, potassium, ammonium, and substituted ammonium salts such as mono-, di- and triethanolamine salts) of soap, C₈-C₂₄ olefinsulfonates, sulfonated polycarboxylic acids prepared by sulfonation of the pyrolyzed product of alkaline earth metal citrates, e.g., as described in British patent specification No. 1,082,179; acyl glycerol sulfonates, fatty oleyl glycerol sulfates, alkyl phenol ethylene oxide ether sulfates, alkyl phosphates, isethionates such as the acyl isethionates, N-acyl taurates, alkyl succinamates and sulfosuccinates, monoesters of sulfosuccinate (especially saturated and unsaturated C₁₂-C₁₈ monoesters) diesters of sulfosuccinate (especially saturated and unsaturated C₆-C₁₄ diesters), acyl sarcosinates, sulfates of alkylpolysaccharides such as the sulfates of alkylpolyglucoside (the nonionic nonsulfated compounds being described below), branched primary alkyl sulfates, alkyl polyethoxy carboxylates such as those of the formula RO(CH₂CH₂O)ₖCH₂COO-M⁺ wherein R is a C₈-C₂₂ alkyl, k is an integer from 0 to 10, and M is a soluble salt-forming cation. Resin acids and hydrogenated resin acids are also suitable, such as rosin, hydrogenated rosin, and resin acids and hydrogenated resin acids present in or derived from tall oil. Further examples are given in "Surface Active Agents and Detergents" (Vol. I and II by Schwartz, Perry and Berch). A variety of such surfactants are also generally disclosed in U.S. Patent 3,929,678, issued December 30, 1975 to Laughlin, et al. at Column 23, line 58 through Column 29, line 23.

In one preferred embodiment, preferred anionic surfactants for use herein are the C8-C16 alkyl sulfonates, C8-C16 alkyl sulfates, including branched alkyl sulphates, C8-C16 alkyl alkoxylated sulfates (e.g., C8-C16 alkyl ethoxylated sulfates), C8-C16 alkyl alkoxylated sulphonates and mixtures thereof. Such anionic surfactants are preferred herein as it has been found that they contribute to the disinfecting properties of a disinfecting composition herein. For example, C8-C16 alkyl sulfate acts by disorganizing the bacteria cell membrane, inhibiting enzymatic activities, interrupting the cellular transport and/or denaturing cellular proteins. Indeed, it is speculated that the improved disinfecting performance further associated with the addition of an anionic surfactant, especially a C8-C16 alkyl sulfonate, a C8-C16 alkyl sulfate and/or a C8-C16 alkyl alkoxylated sulfate, in a composition according to the present invention, is likely due to multiple mode of attack of said surfactant against the bacteria.

In a second preferred embodiment, the anionic surfactant is selected from the group consisting of: C₆₋₂₄ alkyl sulphates; C₆₋₂₄ alkyl aryl sulphates; C₆₋₂₄ alkyl alkoxylated sulphates; C₆₋₂₄ alkyl sulphonates, including paraffin sulphonates; C₆₋₂₄ alkyl aryl sulphonates; C₆₋₂₄ alkyl alkoxylated sulphonates; C₆-C₂₄ alkyl alkoxylated linear or branched diphenyl oxide disulphonates; naphthalene sulphonates; and mixtures thereof. More preferably the anionic surfactant is selected from the group consisting of : C₆₋₂₄ alkyl sulphonates; C₆₋₂₄ alkyl sulphates; C₆₋₂₄ alkyl alkoxylated sulphates; C₆₋₂₄ alkyl aryl sulphonates; and mixtures thereof. Even more preferably the anionic surfactant for use herein is a paraffin sulphonate. Most preferably the anionic surfactant for use herein is a C₁₄-C₁₇ paraffin sulphonate.

In a third preferred embodiment the anionic surfactant is a branched alkyl sulphate surfactant. Branched alkyl sulphate is herein defined to mean a an alkyl sulfate comprising a sulfate group and a carbon chain of preferably from 2 to 20, more preferably from 2 to 16, most preferably from 2 to 8 carbon atoms. The carbon chain of the branched alkyl sulfate comprises at least one branching group attached to the carbon chain. The branching group is selected from the group consisting of an alkyl group having from 1 to 20 , more preferably from 1 to 10 and most preferably from 1 to 4 carbon atoms. The branching group may be located at any position along the alkyl chain of the branched alkyl sulfate. More preferably the branching group is located at position from 1 to 4 along the alkyl chain. The sulfate group can be at any point along the length of the alkyl chain, most preferable at a terminus.

Suitable preferred branched alkyl sulfates include those available from Albright & Wilson under the tradename Empicol 0585/A.

### Nonionic Surfactant:

Suitable nonionic surfactants for use herein are fatty alcohol ethoxylates and/or propoxylates which are commercially available with a variety of fatty alcohol chain lengths and a variety of ethoxylation degrees. Indeed, the HLB values of such alkoxylated nonionic surfactants depend essentially on the chain length of the fatty alcohol, the nature of the alkoxylation and the degree of alkoxylation. Surfactant catalogues are available which list a number of surfactants, including nonionics, together with their respective HLB values. Preferred nonionic surfactants for one embodiment are those having an average HLB from 8 to 20, more preferably from 10 to 18, most preferably from 11 to 16. These hydrophobic nonionic surfactants have been found to provide good grease cutting properties.

Preferred hydrophobic nonionic surfactants for use in the compositions according to the present invention are surfactants having an HLB below 16 and being according to the formula RO-(C₂H₄O)ₙ(C₃H₆O)ₘH, wherein R is a C₆ to C₂₂ alkyl chain or a C₆ to C₂₈ alkyl benzene chain, and wherein n+m is from 0 to 20 and n is from 0 to 15 and m is from 0 to 20, preferably n+m is from 1 to 15 and, n and m are from 0.5 to 15, more preferably n+m is from 1 to 10 and, n and m are from 0 to 10. The preferred R chains for use herein are the C₈ to C₂₂ alkyl chains. Accordingly, suitable hydrophobic nonionic surfactants for use herein are Dobanol ^{R} 91-2.5 (HLB= 8.1; R is a mixture of C9 and C₁₁ alkyl chains, n is 2.5 and m is 0), or Lutensol ^{R} TO3 (HLB=8; R is a C₁₃ alkyl chains, n is 3 and m is 0), or Lutensol ^{R} AO3 (HLB=8; R is a mixture of C₁₃ and C₁₅ alkyl chains, n is 3 and m is 0), or Tergitol ^{R} 25L3 (HLB= 7.7; R is in the range of C₁₂ to C₁₅ alkyl chain length, n is 3 and m is 0), or Dobanol ^{R} 23-3 (HLB=8.1; R is a mixture of C₁₂ and C₁₃ alkyl chains, n is 3 and m is 0), or Dobanol ^{R} 23-2 (HLB=6.2; R is a mixture of C₁₂ and C₁₃ alkyl chains, n is 2 and m is 0), or Dobanol ^{R} 45-7 (HLB=11.6; R is a mixture of C₁₄ and C₁₅ alkyl chains, n is 7 and m is 0) Dobanol ^{R} 23-6.5 (HLB=11.9; R is a mixture of C₁₂ and C₁₃ alkyl chains, n is 6.5 and m is 0), or Dobanol ^{R} 25-7 (HLB=12; R is a mixture of C₁₂ and C₁₅ alkyl chains, n is 7 and m is 0), or Dobanol ^{R} 91-5 (HLB=11.6; R is a mixture of C₉ and C₁₁ alkyl chains, n is 5 and m is 0), or Dobanol ^{R} 91-6 (HLB=12.5 ; R is a mixture of C₉ and C₁₁ alkyl chains, n is 6 and m is 0), or Dobanol ^{R} 91-8 (HLB=13.7 ; R is a mixture of C₉ and C₁₁ alkyl chains, n is 8 and m is 0), Dobanol ^{R} 91-10 (HLB=14.2; R is a mixture of C₉ to C₁₁ alkyl chains, n is 10 and m is 0), or mixtures thereof. Preferred herein are Dobanol ^{R} 91-2.5 , or Lutensol ^{R} TO3, or Lutensol ^{R} AO3, or Tergitol ^{R} 25L3, or Dobanol ^{R} 23-3, or Dobanol ^{R} 23-2, or mixtures thereof. These Dobanol^{R} surfactants are commercially available from SHELL. These Lutensol^{R} surfactants are commercially available from BASF and these Tergitol ^{R} surfactants are commercially available from UNION CARBIDE.

In a preferred embodiment the nonionic surfactant herein is an alkoxylated nonionic surfactant according to the formula RO-(A)ₙH, wherein : R is a C₆ to C₂₂, preferably a C₈ to C₂₂, more preferably a C₉ to C₁₄ alkyl chain, or a C₆ to C₂₈ alkyl benzene chain; A is an ethoxy or propoxy or butoxy unit; and wherein n is from 0 to 20, preferably from 1 to 15 and, more preferably from 2 to 15 even more preferably from 2 to 12 and most preferably from 4 to 10. Preferred R chains for use herein are the C₈ to C₂₂ alkyl chains. Even more preferred R chains for use herein are the C₉ to C₁₂ alkyl chains. Ethoxy/butoxylated, ethoxy/propoxylated, butoxy/propoxylated and ethoxy/butoxy/propoxylated nonionic surfactants may also be used herein. Preferred alkoxylated nonionic surfactants are ethoxylated nonionic surfactants.

Suitable alkylpolysaccharides for use herein are disclosed in U.S. Pat. No. 4,565,647, Llenado, issued Jan. 21, 1986, having a hydrophobic group containing from about 6 to about 30 carbon atoms, preferably from about 10 to about 16 carbon atoms and a polysaccharide, e.g., a polyglycoside, hydrophilic group. For acidic or alkaline cleaning compositions/solutions suitable for use in no-rinse methods, the preferred alkyl polysaccharide preferably comprises a broad distribution of chain lengths, as these provide the best combination of wetting, cleaning, and low residue upon drying. This "broad distribution" is defined by at least about 50% of the chainlength mixture comprising from about 10 carbon atoms to about 16 carbon atoms. Preferably, the alkyl group of the alkyl polysaccharide consists of a mixtures of chainlength, preferably from about 6 to about 18 carbon atoms, more preferably from about 8 to about 16 carbon atoms, and hydrophilic group containing from about one to about 1.5 saccharide, preferably glucoside, groups per molecule. This "broad chainlength distribution" is defined by at least about 50% of the chainlength mixture comprising from about 10 carbon atoms to about 16 carbon atoms. A broad mixture of chain lengths, particularly C₈-C₁₆, is highly desirable relative to narrower range chain length mixtures, and particularly versus lower (i.e., C₈-C₁₀ or C₈-C₁₂) chainlength alkyl polyglucoside mixtures. It is also found that the preferred C₈₋₁₆ alkyl polyglucoside provides much improved perfume solubility versus lower and narrower chainlength alkyl polyglucosides, as well as other preferred surfactants, including the C₈-C₁₄ alkyl ethoxylates. Any reducing saccharide containing 5 or 6 carbon atoms can be used, e.g., glucose, galactose and galactosyl moieties can be substituted for the glucosyl moieties. (optionally the hydrophobic group is attached at the 2-, 3-, 4-, etc. positions thus giving a glucose or galactose as opposed to a glucoside or galactoside.) The intersaccharide bonds can be, e.g., between the one position of the additional saccharide units and the 2-, 3-, 4-, and/or 6- positions on the preceding saccharide units. The glycosyl is preferably derived from glucose.

Optionally, and less desirably, there can be a polyalkyleneoxide chain joining the hydrophobic moiety and the polysaccharide moiety. The preferred alkyleneoxide is ethylene oxide. Typical hydrophobic groups include alkyl groups, either saturated or unsaturated, branched or unbranched containing from 8 to 18, preferably from 10 to 16, carbon atoms. Preferably, the alkyl group is a straight-chain saturated alkyl group. The alkyl group can contain up to about 3 hydroxyl groups and/or the polyalkyleneoxide chain can contain up to about 10, preferably less than 5, alkyleneoxide moieties. Suitable alkyl polysaccharides are octyl, nonyldecyl, undecyldodecyl, tridecyl, tetradecyl, pentadecyl, hexadecyl, heptadecyl, and octadecyl, di-, tri-, tetra-, penta-, and hexaglucosides and/ or galatoses. Suitable mixtures include coconut alkyl, di-, tri-, tetra-, and pentaglucosides and tallow alkyl tetra-, penta- and hexaglucosides.

To prepare these compounds, the alcohol or alkylpolyethoxy alcohol is formed first and then reacted with glucose, or a source of glucose, to form the glucoside (attachment at the 1-position). The additional glycosyl units can then be attached between their 1-position and the preceding glycosyl units 2-,3-, 4- and/or 6-position, preferably predominantly the 2-position.

In the alkyl polyglycosides, the alkyl moieties can be derived from the usual sources like fats, oils or chemically produced alcohols while their sugar moieties are created from hydrolyzed polysaccharides. Alkyl polyglycosides are the condensation product of fatty alcohol and sugars like glucose with the number of glucose units defining the relative hydrophilicity. As discussed above, the sugar units can additionally be alkoxylated either before or after reaction with the fatty alcohols. Such alkyl polyglycosides are described in detail in WO 86/05199 for example. Technical alkyl polyglycosides are generally not molecularly uniform products, but represent mixtures of alkyl groups and mixtures of monosaccharides and different oligosaccharides. Alkyl polyglycosides (also sometimes referred to as "APG's") are preferred for the purposes of the invention since they provide additional improvement in surface appearance relative to other surfactants. The glycoside moieties are preferably glucose moieties. The alkyl substituent is preferably a saturated or unsaturated alkyl moiety containing from about 8 to about 18 carbon atoms, preferably from about 8 to about 10 carbon atoms or a mixture of such alkyl moieties. C₈-C₁₆ alkyl polyglucosides are commercially available (e.g., Simusol® surfactants from Seppic Corporation, 75 Quai d'Orsay, 75321 Paris, Cedex 7, France, and Glucopon®425 available from Henkel. However, it has been found that purity of the alkyl polyglucoside can also impact performance, particularly end result for certain applications, including daily shower product technology. In the present invention, the preferred alkyl polyglucosides are those which have been purified enough for use in personal cleansing. Most preferred are "cosmetic grade" alkyl polyglucosides, particularly C₈ to C₁₆ alkyl polyglucosides, such as Plantaren 2000®, Plantaren 2000 N®, and Plantaren 2000 N UP®, available from Henkel Corporation (Postfach 101100, D 40191 Dusseldorf, Germany).

### Amphoteric/Zwitterionic Surfactant:

Suitable amphoteric surfactants for use herein include amine oxides having the following formula R₁R₂R₃NO wherein each of R1, R2 and R3 is independently a saturated substituted or unsubstituted, linear or branched hydrocarbon chains of from 1 to 30 carbon atoms. Preferred amine oxide surfactants to be used according to the present invention are amine oxides having the following formula R₁R₂R₃NO wherein R1 is an hydrocarbon chain comprising from 1 to 30 carbon atoms, preferably from 6 to 20, more preferably from 8 to 16, most preferably from 8 to 12, and wherein R2 and R3 are independently substituted or unsubstituted, linear or branched hydrocarbon chains comprising from 1 to 4 carbon atoms, preferably from 1 to 3 carbon atoms, and more preferably are methyl groups. R1 may be a saturated substituted or unsubstituted linear or branched hydrocarbon chain.

Suitable amine oxides for use herein are for instance natural blend C8-C10 amine oxides as well as C12-C16 amine oxides commercially available from Hoechst and Clariant.

Suitable zwitterionic surfactants for use herein contain both cationic and anionic hydrophilic groups on the same molecule at a relatively wide range of pH's. The typical cationic group is a quaternary ammonium group, although other positively charged groups like phosphonium, imidazolium and sulfonium groups can be used. The typical anionic hydrophilic groups are carboxylates and sulfonates, although other groups like sulfates, phosphonates, and the like can be used. A generic formula for some zwitterionic surfactants to be used herein is

R₁-N⁺(R₂)(R₃)R₄X⁻

wherein R₁ is a hydrophobic group; R₂ and R₃ are each C₁-C₄ alkyl, hydroxy alkyl or other substituted alkyl group which can also be joined to form ring structures with the N; R₄ is a moiety joining the cationic nitrogen atom to the hydrophilic group and is typically an alkylene, hydroxy alkylene, or polyalkoxy group containing from 1 to 10 carbon atoms; and X is the hydrophilic group which is preferably a carboxylate or sulfonate group. Preferred hydrophobic groups R₁ are alkyl groups containing from 1 to 24, preferably less than 18, more preferably less than 16 carbon atoms. The hydrophobic group can contain unsaturation and/or substituents and/or linking groups such as aryl groups, amido groups, ester groups and the like. In general, the simple alkyl groups are preferred for cost and stability reasons.

Highly preferred zwitterionic surfactants include betaine and sulphobetaine surfactants, functionalized betaines such as acyl betaines, alkyl imidazoline alanine betaines, glycine betaines, derivatives thereof and mixtures thereof. Said betaine or sulphobetaine surfactants are preferred herein as they help disinfection by increasing the permeability of the bacterial cell wall, thus allowing other active ingredients to enter the cell.

Furthermore, due to the mild action profile of said betaine or sulphobetaine surfactants, they are particularly suitable for the cleaning of delicate surfaces, e.g., delicate laundry or surfaces in contact with food and/or babies. Betaine and sulphobetaine surfactants are also extremely mild to the skin and/or surfaces to be treated.

Suitable betaine and sulphobetaine surfactants for use herein are the betaine/sulphobetaine and betaine-like detergents wherein the molecule contains both basic and acidic groups which form an inner salt giving the molecule both cationic and anionic hydrophilic groups over a broad range of pH values. Some common examples of these detergents are described in U.S. Pat. Nos. 2,082,275, 2,702,279 and 2,255,082, incorporated herein by reference. Preferred betaine and sulphobetaine surfactants herein are according to the formula 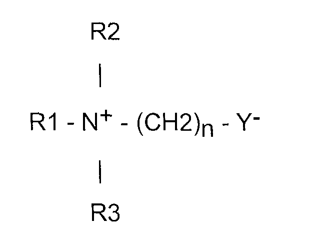 wherein R1 is a hydrocarbon chain containing from 1 to 24 carbon atoms, preferably from 8 to 18, more preferably from 12 to 14, wherein R2 and R3 are hydrocarbon chains containing from 1 to 3 carbon atoms, preferably 1 carbon atom, wherein n is an integer from 1 to 10, preferably from 1 to 6, more preferably is 1, Y is selected from the group consisting of carboxyl and sulfonyl radicals and wherein the sum of R1, R2 and R3 hydrocarbon chains is from 14 to 24 carbon atoms, or mixtures thereof.

Examples of particularly suitable betaine surfactants include C12-C18 alkyl dimethyl betaine such as coconut-betaine and C10-C16 alkyl dimethyl betaine such as laurylbetaine. Coconutbetaine is commercially available from Seppic under the trade name of Amonyl 265®. Laurylbetaine is commercially available from Albright & Wilson under the trade name Empigen BB/L®.

Other specific zwitterionic surfactants have the generic formulas:

R₁-C(O)-N(R₂)-(C(R₃)₂)ₙ-N(R₂)₂ ⁽⁺⁾-(C(R₃)₂)ₙ-SO₃ ⁽⁻⁾

or

R₁-C(O)-N(R₂)-(C(R₃)₂)ₙ-N(R₂)₂ ⁽⁺⁾-(C(R₃)₂)ₙ-COO⁽⁻⁾

wherein each R₁ is a hydrocarbon, e.g. an alkyl group containing from 8 up to 20, preferably up to 18, more preferably up to 16 carbon atoms, each R₂ is either a hydrogen (when attached to the amido nitrogen), short chain alkyl or substituted alkyl containing from one to 4 carbon atoms, preferably groups selected from the group consisting of methyl, ethyl, propyl, hydroxy substituted ethyl or propyl and mixtures thereof, preferably methyl, each R₃ is selected from the group consisting of hydrogen and hydroxy groups and each n is a number from 1 to 4, preferably from 2 to 3, more preferably 3, with no more than one hydroxy group in any (C(R₃)₂) moiety. The R₁ groups can be branched and/or unsaturated. The R₂ groups can also be connected to form ring structures. A surfactant of this type is a C₁₀-C₁₄ fatty acylamidopropylene(hydroxypropylene)sulfobetaine that is available from the Sherex Company under the trade name "Varion CAS sulfobetaine"®.

### Peroxygen Bleach

The compositions according to the present invention may comprise a peroxygen bleach as an optional feature.
A preferred peroxygen bleach is hydrogen peroxide, or a water soluble source thereof, or mixtures thereof. As used herein a hydrogen peroxide source refers to any compound which produces hydrogen peroxide when said compound is in contact with water. Suitable water-soluble sources of hydrogen peroxide for use herein include percarbonates, persilicates, persulphates such as monopersulfate, perborates and peroxyacids such as diperoxydodecandioic acid (DPDA), magnesium perphthalic acid and mixtures thereof.
In addition, other classes of peroxides can be used as an alternative to hydrogen peroxide and sources thereof or in combination with hydrogen peroxide and sources thereof. Suitable classes include dialkylperoxides, diacylperoxides, preformed percarboxylic acids, organic and inorganic peroxides and/or hydroperoxides. The most preferred peroxygen bleach is hydrogen peroxide.

The presence of said peroxygen bleach especially hydrogen peroxide, persulfate and the like, in the compositions according to the present invention can contribute to disinfection properties of said compositions. Indeed, said peroxygen bleach may attack the vital function of the micro-organism cells, for example, it may inhibit the assembling of ribosomes units within the cytoplasm of the microorganisms cells. Also said peroxygen bleach like hydrogen peroxide, is an oxidiser that generates hydroxyl free radicals which attack proteins and nucleic acids. Furthermore, the presence of said peroxygen bleach, especially hydrogen peroxide, provides strong stain removal benefits which are particularly noticeable for example in laundry and hard surfaces applications.

Typically, peroxygen bleach or a mixture thereof is present in the compositions according to the present invention at a level of at least 0.01% by weight of the total composition, preferably from 0.1% to 15%, and more preferably from 1% to 10%.

### Disinfecting agent

Another preferred component of the compositions of the present invention is a disinfecting agent. Any suitable known disinfecting agent may be used herein including organic acids, quaternary ammonium compounds, antimicrobial essential oils or actives thereof, or a mixtures thereof.

Preferred therein include organic acids, antimicrobial essential oils or actives thereof, or a mixtures thereof. Preferred organic acids include citric acid, tartaric acid, salicylic acid, lactic acid and mixtures thereof.

Suitable antimicrobial essential oils to be used herein are those essential oils which exhibit antimicrobial activity. By "actives of essential oils", it is meant herein any ingredient of essential oils or natural extracts that exhibit antimicrobial activity. It is speculated that said antimicrobial essential oils and actives thereof act as proteins denaturing agents. Also said antimicrobial oils and actives thereof are compounds which contribute to the safety profile of a composition comprising them when it is used to disinfect any surface. A further advantage of said antimicrobial oils and actives thereof is that they impart pleasant odor to a composition comprising them without the need of adding a perfume.

Such antimicrobial essential oils include, but are not limited to, those obtained from thyme, lemongrass, citrus, lemons, oranges, anise, clove, aniseed, pine, cinnamon, geranium, roses, mint, lavender, citronella, eucalyptus, peppermint, camphor, ajowan, sandalwood, rosmarin, vervain, fleagrass, lemongrass, ratanhiae, cedar, origanum, cypressus, propolis extracts and mixtures thereof. Preferred antimicrobial essential oils to be used herein are thyme oil, clove oil, cinnamon oil, geranium oil, eucalyptus oil, peppermint oil, citronella oil, ajowan oil, mint oil, origanum oil, propolis, cypressus oil cedar , garlic extract or mixtures thereof.

Actives of essential oils to be used herein include, but are not limited to, thymol (present for example in thyme, ajowan), eugenol (present for example in cinnamon and clove), menthol (present for example in mint), geraniol (present for example in geranium and rose, citronella), verbenone (present for example in vervain), eucalyptol and pinocarvone (present in eucalyptus), cedrol (present for example in cedar), anethol (present for example in anise), carvacrol, hinokitiol, berberine, ferulic acid, cinnamic acid, methyl salicylic acid, methyl salycilate, terpineol, limonene and mixtures thereof. Preferred actives of essential oils to be used herein are thymol, eugenol, verbenone, eucalyptol, terpineol, cinnamic acid, methyl salicylic acid, limonene, geraniol, ajolene or mixtures thereof.

Thymol may be commercially available for example from Aldrich, eugenol may be commercially available for example from Sigma, Systems - Bioindustries (SBI) - Manheimer Inc.

Typically, the antimicrobial essential oil or active thereof or mixture thereof is present in the composition at a level of at least 0.001% by weight of the total composition, preferably from 0.006% to 10%, more preferably from 0.01% to 8% and most preferably of from 0.03% to 3%.

It has now been found that combining said antimicrobial essential oil or an active thereof or a mixture thereof with a peroxygen bleach, in a composition, delivers not only excellent immediate disinfecting properties to the surfaces treated with said composition, but also long lasting disinfecting properties. Indeed, it is speculated that peroxygen bleach and said essential oils/actives adsorb on a surface having been treated with said composition and thus reduce or even prevent the contamination of microorganisms over time, typically up to 48 hours after the surface has been treated with said composition, thereby delivering long lasting disinfection. In other words, it is speculated that a microfilm of said active ingredients is deposited on the surface treated with said compositions allowing protection against microorganisms recontamination overtime. Advantageously, this long lasting disinfection benefits is obtained with the compositions of the present invention comprising peroxygen bleach and antimicrobial essential oils/actives even when used under highly diluted conditions, i.e., up to dilution levels of from 1:100 (composition:water).

Excellent long lasting disinfection is obtained by treating a surface with a composition comprising a peroxygen bleach and an antimicrobial essential oil or active thereof as described herein, on a variety of microorganisms, e.g., the growth of Gram positive bacteria like *Staphylococcus aureus,* and Gram negative bacteria like *Pseudomonas aeroginosa* as well as of fungi like *Candida albicans* is reduced or even prevented on a surface having been treated with said composition.

Long lasting disinfection properties of the compositions herein may be measured by the bactericidal activity of said compositions. A test method suitable to evaluate the long lasting bactericidal activity of a composition may be as follow: First, the surfaces (e.g. glass) to be tested are respectively treated with either a composition according to the present invention or a reference composition, e.g., a negative control composed of pure water (for example by spraying the composition directly on the surface or first spraying the composition on a sponge used to clean the surface or when the composition herein is executed in the form of wipe by wiping the surface therewith). After a variable time frame (e.g. 24 hours) each surface is respectively inoculated with bacteria (10⁶⁻⁷cfu/slide) cultured in for example TSB (Tryptone Soya Broth) and left typically from a few seconds to 2 hours before evaluating the remaining living bacteria. Then living bacteria (if any) are recovered from the surface (by touching TSA + neutraliser plates and by re-suspending the bacteria into the neutralisation broth and plating them on agar) and incubated at appropriate temperature, e.g. 37°C to let them grow typically over night. Finally, a visual grading of the living bacteria is made by comparing side by side the cultures and/or dilutions thereof (e.g. 10⁻² or 10⁻¹) resulting from the surfaces treated with the compositions according to the present invention and the reference composition.

In a particular embodiment of the present invention, depending on the end use desired with said compositions they may further comprise, as optional ingredients, other antimicrobial compounds that further contribute to the antimicrobial/antibacterial activity of the compositions according to the present invention. Such antimicrobial ingredients include parabens like ethyl paraben, propyl paraben, methyl paraben, glutaraldehyde or mixtures thereof.

### Chelating Agent

The compositions herein may further comprise a chelating agent as a preferred optional ingredient. Suitable chelating agents may be any of those known to those skilled in the art such as the ones selected from the group comprising phosphonate chelating agents, aminophosphonate chelating agents, substituted heteroaromatic chelating agents, amino carboxylate chelating agents, other carboxylate chelating agents, polyfunctionally-substituted aromatic chelating agents, biodegradable chelating agents like ethylene diamine N,N'- disuccinic acid, or mixtures thereof.

Suitable phosphonate chelating agents to be used herein include etidronic acid (1-hydroxyethylene-diphosphonic acid (HEDP)), and/or alkali metal ethane 1-hydroxydiphosphonates.

Suitable amino phosphonate chelating agents to be used herein include amino alkylene poly (alkylene phosphonates), nitrilotris(methylene)triphosphonates, ethylene diamine tetra methylene phosphonates, and/or diethylene triamine penta methylene phosphonates. Preferred aminophosphonate chelating agents to be used herein are diethylene triamine penta methylene phosphonates.

These phosphonate/amino phosphonate chelating agents may be present either in their acid form or as salts of different cations on some or all of their acid functionalities. Such phosphonate/amino phosphonate chelating agents are commercially available from Monsanto under the trade name DEQUEST®.

Substituted heteroaromatic chelating agents to be used herein include hydroxypiridine-N-oxide or a derivative thereof.
Suitable hydroxy pyridine N-oxides and derivatives thereof to be used according to the present invention are according to the following formula: 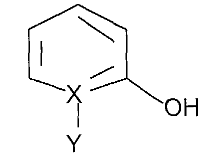 wherein X is nitrogen, Y is one of the following groups oxygen, -CHO, -OH, -(CH2)n-COOH, wherein n is an integer of from 0 to 20, preferably of from 0 to 10 and more preferably is 0, and wherein Y is preferably oxygen. Accordingly particularly preferred hydroxy pyridine N-oxides and derivatives thereof to be used herein is 2-hydroxy pyridine N-oxide. Hydroxy pyridine N-oxides and derivatives thereof may be commercially available from Sigma.

Polyfunctionally-substituted aromatic chelating agents may also be useful in the compositions herein. See U.S. patent 3,812,044, issued May 21, 1974, to Connor et al. Preferred compounds of this type in acid form are dihydroxydisulfobenzenes such as 1,2-dihydroxy -3,5-disulfobenzene.

A preferred biodegradable chelating agent for use herein is ethylene diamine N,N'- disuccinic acid, or alkali metal, or alkaline earth, ammonium or substitutes ammonium salts thereof or mixtures thereof. Ethylenediamine N,N'- disuccinic acids, especially the (S,S) isomer have been extensively described in US patent 4, 704, 233, November 3, 1987 to Hartman and Perkins. Ethylenediamine N,N'- disuccinic acid is, for instance, commercially available under the tradename ssEDDS® from Palmer Research Laboratories. Ethylene diamine N,N'- disuccinic acid is particularly suitable to be used in the compositions of the present invention. Suitable amino carboxylate chelating agents useful herein include ethylene diamine tetra acetates, diethylene triamine pentaacetates, diethylene triamine pentoacetate (DTPA), N-hydroxyethylethylenediamine triacetates, nitrilotriacetates, ethylenediamine tetraproprionates, triethylenetetraaminehexa-acetates, ethanoldiglycines, propylene diamine tetracetic acid (PDTA) and methyl glycine di-acetic acid (MGDA), both in their acid form, or in their alkali metal, ammonium, and substituted ammonium salt forms. Particularly suitable to be used herein are diethylene triamine penta acetic acid (DTPA), propylene diamine tetracetic acid (PDTA) which is, for instance, commercially available from BASF under the trade name Trilon FS® and methyl glycine di-acetic acid (MGDA).

Further carboxylate chelating agents to be used herein includes malonic acid, salicylic acid, glycine, aspartic acid, glutamic acid, or mixtures thereof.

Typically, the compositions according to the present invention comprise up to 5% by weight of the total composition of a chelating agent, or mixtures thereof, preferably from 0.01% to 3% by weight and more preferably from 0.01 % to 1.5%.

### Radical Scavenger

The compositions herein may comprise a radical scavenger as another optional ingredient. Suitable radical scavengers for use herein include the well-known substituted mono and di hydroxy benzenes and derivatives thereof, alkyl- and aryl carboxylates and mixtures thereof. Preferred radical scavengers for use herein include di-tert-butyl hydroxy toluene (BHT), p-hydroxy-toluene, hydroquinone (HQ), di-tert-butyl hydroquinone (DTBHQ), mono-tert-butyl hydroquinone (MTBHQ), tert-butyl-hydroxy anysole (BHA), p-hydroxy-anysol, benzoic acid, 2,5-dihydroxy benzoic acid, 2,5-dihydroxyterephtalic acid, toluic acid, catechol, t-butyl catechol, 4-allyl-catechol, 4-acetyl catechol, 2-methoxy-phenol, 2-ethoxy-phenol, 2-methoxy-4-(2-propenyl)phenol, 3,4-dihydroxy benzaldehyde, 2,3-dihydroxy benzaldehyde, benzylamine, 1,1,3-tris(2-methyl-4-hydroxy-5-t-butylphenyl) butane, tert-butyl-hydroxy-anyline, p-hydroxy anyline as well as n-propyl-gallate. Highly preferred for use herein are di-tert-butyl hydroxy toluene, which is for example commercially available from SHELL under the trade name IONOL CP® and/or tert-butyl-hydroxy anysole. These radical scavengers further contribute to the stability of the peroxygen bleach-containing compositions herein.

Typically, the compositions according to the present invention comprise up to 5% by weight of the total composition of a radical scavenger, or mixtures thereof, preferably from 0.002% to 1.5% by weight and more preferably from 0.002% to 1%.

### Solvent

The compositions herein may comprise as a preferred optional ingredient a solvent or mixtures thereof. When used, solvents will, advantageously, give an enhanced cleaning to the compositions herein. Suitable solvents for incorporation in the compositions according to the present invention include propylene glycol derivatives such as n-butoxypropanol or n-butoxypropoxypropanol, water-soluble CARBITOL® solvents or water-soluble CELLOSOLVE® solvents. Water-soluble CARBITOL® solvents are compounds of the 2-(2-alkoxyethoxy)ethanol class wherein the alkoxy group is derived from ethyl, propyl or butyl. A preferred water-soluble carbitol is 2-(2-butoxyethoxy)ethanol also known as butyl carbitol. Water-soluble CELLOSOLVE® solvents are compounds of the 2-alkoxyethoxyethanol class, with 2-butoxyethoxyethanol being preferred. Other suitable solvents are benzyl alcohol, methanol, ethanol, isopropyl alcohol and diols such as 2-ethyl-1,3-hexanediol and 2,2,4-trimethyl-1,3-pentanediol, volatile silicones and mixture thereof. Preferred solvents for use herein are n-butoxypropoxypropanol, butyl carbitol®, benzyl alcohol, isopropanol, 1-propanol and mixtures thereof. Most preferred solvents for use herein are butyl carbitol®, benzyl alcohol, 1-propanol and/or isopropanol.
The solvents may typically be present within the compositions according to the invention at a level up to 15% by weight, preferably from 0.5% to 10% by weight of the composition.

### pH buffer

In the embodiment of the present invention wherein the compositions are formulated in the alkaline pH range, typically from 7.5 to 12, the compositions according to the present invention may further comprise a pH buffer or a mixture thereof, i.e. a system composed of a compound or a combination of compounds, whose pH changes only slightly when a strong acid or base is added.

Suitable pH buffers for use herein include borate pH buffer, phosphonate, silicate and mixtures thereof. Suitable borate pH buffers for use herein include alkali metal salts of borates and alkyl borates and mixtures thereof. Suitable borate pH buffers to be used herein are alkali metal salts of borate, metaborate, tetraborate, octoborate, pentaborate, dodecaboron, borontrifluoride and/or alkyl borate containing from 1 to 12 carbon atoms, and preferably from 1 to 4. Suitable alkyl borate includes methyl borate, ethyl borate and propyl borate. Particularly preferred herein are the alkali metal salts of metaborate (e.g. sodium metaborate), tetraborate (e.g., sodium tetraborate decahydrate) or mixtures thereof.

Boron salts like sodium metaborate and sodium tetraborate are commercially available from Borax and Societa Chimica Larderello under the trade name sodium metaborate® and Borax®.

The pH of the composition can also be adjusted to an acidic pH and/or buffered at that pH using any suitable acidifying agent, for example organic acids for example citric acid, tartaric acid, lactic acid and mixtures thereof.

Typically, the compositions according to the present invention may comprise up to 15% by weight of the total composition of a pH buffer, or mixtures thereof, preferably from 0.01% to 10%, more preferably from 0.01% to 5% and most preferably from 0.1% to 3%.

### Packaging form of the wet wipes

In a preferred embodiment according to the present invention, the printed wet wipes are packaged in a container and preferably in any convenient configuration which allows easy removal of a single or multiple wet wipes from the container. Preferably the wipes are packaged in rolls, stacks or piles. More preferably the wipes are provided in a stacked configuration which may comprise any number of wipes. Typically, the stack comprises from 2 to 150, more preferably from 5 to 100, most preferably from 10 to 60 wipes. Moreover the wipes may be provided folded or unfolded. Most preferably, the wipes are stacked in a folded configuration.

### Process of treating a surface

In a preferred embodiment, the present invention encompasses a process of cleaning and/or disinfecting a surface, preferably a hard surface, comprising the step of contacting, preferably wiping, said surface with a printed substrate which incorporates a composition as described herein.

In a preferred embodiment of the present application, said process comprises the steps of contacting parts of said surface, more preferably soiled parts of said surface, with said substrate which incorporates a composition as described herein.

In another preferred embodiment said process, after contacting said surface with said substrate which incorporates a composition as described herein, further comprises the step of imparting mechanical action to said surface using said substrate which incorporates a composition as described herein. By "mechanical action" it is meant herein, agitation of the wet wipe on the surface, as for example rubbing the surface using the wet wipe.

By "surface", it is meant herein any surface including animate surface like human skin, mouth, teeth, and inanimate surfaces. Inanimate surfaces include, but are not limited to, hard-surfaces typically found in houses like kitchens, bathrooms, or in car interiors, e.g., tiles, walls, floors, chrome, glass, smooth vinyl, any plastic, plastified wood, table top, sinks, cooker tops, dishes, sanitary fittings such as sinks, showers, shower curtains, wash basins, WCs and the like, as well as fabrics including clothes, curtains, drapes, bed linens, bath linens, table cloths, sleeping bags, tents, upholstered furniture and the like, and carpets. Inanimate surfaces also include household appliances including, but not limited to, refrigerators, freezers, washing machines, automatic dryers, ovens, microwave ovens, dishwashers and so on.

### Examples

Provided below are, non-limiting, examples A to D of cleaning compositions which may be incorporated into the printed wet wipes of the present invention.

| **Ingredient** | **A** | **B** | **C** | **D** |
|---|---|---|---|---|
| | % w/w | % w/w | % w/w | % w/w |
| Ethanol | 9.4 | 9.4 | 9.5 | 9.5 |
| C12-14 Amine Oxide | 0.4 | 0.4 | - | - |
| Propylene Glycol Butyl Ether | 0.55 | 0.55 | - | - |
| Diethylene Glycol Butyl Ether | 0.55 | 0.55 | - | - |
| Polypropylene glycol mono butyl ether | 0.25 | 0.25 | - | - |
| Silicone | 0.003 | 0.003 | 0.003 | 0.003 |
| Citric acid | 0.75 | 0.75 | - | - |
| Sodium hydroxide | 0.1 | - | - | - |
| Hydrogen Peroxide | - | 1.00 | - | - |
| Salicylic acid | - | 0.03 | - | - |
| BHT | - | 0.01 | - | - |
| Geraniol | - | 0.0375 | 0.1 | 0.1 |
| Thymol | - | 0.025 | - | - |
| C12-14 Betaine | - | - | 0.2 | - |
| Dobanol 91-8 | - | - | 0.8 | 0.8 |
| C8 alkyl sulphate branched | - | - | 0.6 | 0.6 |
| C10 Amine Oxide | - | - | - | 0.2 |
| Lactic acid | - | - | 1.5 | 1.5 |
| Perfume | 0.18 | 0.0375 | 0.15 | 0.15 |
| Water | 87.82 | 86.95 | 87.15 | 87.15 |

## Claims

1. A wet wipe comprising a flexible sheet-like substrate which comprises an aqueous composition, **characterised in that** the substrate is printed with a non-aqueous ink.

2. A wet wipe comprising a flexible sheet-like substrate which comprises a non-aqueous composition, **characterised in that** the substrate is printed with an aqueous ink.

3. A wet wipe according to any preceding claim wherein the substrate is a flexible hydro entangled substrate.

4. A wipe according to any preceding claim wherein the composition is aqueous.

5. A wipe according to the preceding claim wherein the ink comprises a pigment dispersed in a vinyl or acrylic containing polymer, and a cross linking agent.

6. A wipe according to any of claims 1 to 4 wherein the ink is fixed to the substrate by means of a varnish film which is spread at least over the printed surface.

7. A process for making a wipe according to any of the preceding claims, **characterised in that** ink is printed onto the substrate before composition is applied to the substrate.

8. A process for making a wipe according to claim 7, comprising the steps of: printing ink onto a substrate, allowing the ink to substantially dry, and applying composition onto the printed substrate.

9. A process for making a wipe according to claim 6, wherein the substrate is printed, then a varnish is spread over at least the surface of the substrate which has been printed, then composition is applied to the substrate.

10. A process of cleaning a hard surface with wipes according to claims 1 to 6.

11. A stack of wipes, at least two of said wipes each being printed with printed matter, wherein the printed wipes are arranged in a certain order so as to communicate a message.

12. A stack of wipes wherein at least one of said wipes, preferably the top wipe, is printed with usage instructions for the wipes.

13. A stack of wipes wherein at least one of said wipes, preferably a wipe amongst the bottom most, is printed with a instructions indicating that the stack of wipes is nearly finished.

14. The use of Bianca TW® to print images onto a substrate to which a composition will be applied.

15. The use of Bianca TW® in the manufacture of printed wet wipes.

16. The use of a crosslinking polymer or a crosslinking agent or mixtures thereof to fix pigment to a substrate to which a composition will be applied.
